# EUROPEAN PATENT SPECIFICATION

(11) **EP 4 072 315 B1**
(45) Date of publication and mention of the grant of the patent: **01.07.2026**
(21) Application number: 20812120.2
(22) Date of filing: 01.12.2020
(51) Int. Cl.: A23L 9/20, A23L 25/10, A23L 2/56, A23L 2/60, A23D 7/005, A23L 25/00

(54) **BEVERAGE PASTE**
GETRÄNKEPASTE
PÂTE POUR POUR PRÉPARER UNE BOISSON

(30) Priority: 09.12.2019 US 201962945346 P; 18.12.2019 EP 19217518
(43) Date of publication of application: 19.10.2022
(73) Proprietor: Société des Produits Nestlé S.A., 1800 Vevey (CH)
(72) Inventor: SAHAI, Deepak, Plain City, OH 43064 (US); CHENG, Pu-Sheng, Dublin, OH 43016 (US); OPET, Nathan, Grove City, OH 43123 (US); ZHENG, Ying, Dublin, OH 43017 (US)
(74) Representative: Vossius & Partner Patentanwälte Rechtsanwälte mbB
(86) International application number: PCT/EP2020/084142
(87) International publication number: WO 2021/115850

(56) References cited:
- WO-A1-00/54838
- WO-A1-2008/039564
- WO-A1-2018/122021
- JP-A- 2002 355 014
- JP-A- 2005 179 279
- US-A- 6 153 247

## Description

### Field of the Invention

The present invention relates to a paste for preparing a beverage. Further aspects of the invention are the use of a paste to prepare a beverage and a process for preparing a paste.

### Background of the Invention

There is increasing consumer interest in beverages which contain high levels of fat, for example beverages containing ingredients such as butter, medium chain triglyceride (MCT) oil or coconut oil. Making such beverages at home is often not convenient, requiring blending the fats into the beverage using a kitchen blender. Even with the use of a mechanical device such as a blender, high fat beverages generally have an oily layer on the top of the beverage which is unattractive.

WO 2018/122021 A1 discloses a beverage concentrate comprising 0.5-10% sweetener, up to 6% fat, 0-2% stabilizer, 0.1-20% plant protein brought in the form of nut paste, 0-2% stabilizer. The stabilizer is selected from carboxymethyl cellulose (CMC), xanthan gum, microcrystalline cellulose (MCC), agar, acacia gum, alginic acid, carrageenan, gellan gum, pectin, or any combination thereof. The beverage concentrate can be reconstituted in water to yield a liquid beverage by stirring at a shearing rate equal to or greater than 43000 s-1 and with a shearing loading equal to or greater than 15000.

US 6 153 247 A discloses a non-dairy beverage, comprising the following ingredients blended into a homogeneous aqueous solution: 2 to 3 parts by weight of a nut butter concentrate; approximately 2 to 3 parts by weight of sugar; and a balance of 96 to 94 parts by weight of potable water. Potable water may be added to the nut beverage concentrate, and the combination is subjected to high shear mixing, producing a nut beverage. The nut concentrate comprises 68 to 86 parts of nut butter; 1.5 to 4.5 parts of lecithin; 4 to 7 parts of potassium citrate; 3 to 7 parts of sea salt; 4 to 10 parts of tricalcium phosphate; 1.6 to 3.4 parts of carrageenan gum.

There are a number of popular high fat spreads, for example hazelnut and chocolate spreads to eat with bread. Typically they contain around 60% sugar and 30% fat. When a spoonful of such a paste is manually mixed into hot water it does not disperse readily. It appears that, as the sugar dissolves, the hazelnut and cocoa powder form a suspension of cocoa particles and large clumps of hazelnut butter. The insoluble cocoa and hazelnut components settle at the bottom.

There is a need for beverages containing high levels of fat which can be conveniently prepared by simple mixing, for example via the provision of a pre-prepared high fat composition that can be added to water or a base beverage such as coffee, tea or cocoa to provide a beverage containing high levels of fat. Ideally the high fat composition should not only provide high levels of fat, it should also lighten the appearance of the beverage and not lead to the formation of an oily layer on the top of the beverage. Preferably the materials used to prepare such beverages should provide a good shelflife and should not contain ingredients that consumers may consider artificial or undesirable.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to".

### Summary of the invention

An object of the present invention is to improve the state of the art and to provide an improved solution to overcome at least some of the inconveniences described above. The object of the present invention is achieved by the subject matter of the independent claims. The dependent claims further develop the idea of the present invention.

Accordingly, the present invention provides in a first aspect a paste for preparing a beverage, the paste having a continuous aqueous phase, the paste comprising 0.1 to 50 wt.% sweetener; 10 to 50 wt.% fat; 10
to 50 wt.% fructan polysaccharides having a molecular weight below 1 x 10⁴ Da; and 0.5 to 5 wt.% high molecular weight polysaccharides having a molecular weight between 1 x 10⁴ Da and 2.5 x 10⁶ Da; wherein the paste is free from added monoacylglycerols, diacylglycerols and diacetylated tartaric acid esters of monoglycerides and is free from low molecular weight emulsifiers added as such,
wherein at least a part of the fat is provided by a nut component comprising nut protein and fat, and
wherein the viscosity of the paste is between 3000 mPa.s and 45000 mPa.s at a shear rate of 75 s-1 at 20 °C.

In a second aspect, the invention provides the use of the paste of the invention to prepare a beverage. In a further aspect, the invention relates to a process for preparing the paste of the invention.

It has been surprisingly found by the inventors that a beverage containing a high level of fat may conveniently be prepared from a paste according to the invention by simply mixing the paste with water (e.g. hot water), for example mixing into water by hand using a spoon. The composition of the invention stabilizes small oil droplets in the continuous aqueous phase of the paste so that the fat disperses readily into an aqueous beverage without causing large globules of oil to appear on the surface of the beverage.

### Brief Description of the Drawings

Figure 1 shows a microscope image of the coconut cream ketogenic beverage enhancer paste of Example 1. Scale bar 50 microns. Arrows point to fat globules.
Figure 2 shows a cup of coffee to which has been added the coconut cream ketogenic beverage enhancer paste of Example 1.
Figure 3 shows a microscope image of an almond butter ketogenic beverage enhancer paste (2a). Scale bar 50 microns. Arrows point to fat globules.
Figure 4 shows a cup of coffee to which has been added an almond butter ketogenic beverage enhancer paste (2a).
Figure 5 shows a microscope image of an almond oil ketogenic beverage enhancer paste (2b). Scale bar 50 microns. Arrows point to fat globules.
Figure 6 shows a cup of coffee to which has been added an almond oil ketogenic beverage enhancer paste (2b).
Figure 7 shows a microscope image of an almond oil with skim milk powder (SMP) ketogenic beverage enhancer paste (2c). Scale bar 50 microns. Arrows point to fat globules.
Figure 8 shows a cup of coffee to which has been added an almond oil with SMP ketogenic beverage enhancer paste (2c).
Figure 9 shows a microscope image of an almond oil with SMP and lecithin ketogenic beverage enhancer paste (2d). Scale bar 50 microns. Arrows point to fat globules.
Figure 10 shows a cup of coffee to which has been added an almond oil with SMP and lecithin ketogenic beverage enhancer paste (2d).

### Detailed Description of the invention

Consequently the present invention relates in part to a paste for preparing a beverage, the paste having a continuous aqueous phase, the paste comprising 0.1 to 50 wt.% sweetener; 10 to 50 wt.% fat (for example 20 to 40 wt.% fat); 10
to 50 wt.% fructan polysaccharides having a molecular weight below 1 x 10⁴ Da (for example 20 to 40 wt.% polysaccharides having a molecular weight below 1 x 10⁴ Da, for further example 25 to 35 wt.% polysaccharides having a molecular weight below 1 x 10⁴ Da); and 0.5 to 5 wt.% (for example 0.8 to 2 wt.%) high molecular weight polysaccharides having a molecular weight between 1 x 10⁴ Da and 2.5 x 10⁶ Da; wherein the paste is free from added monoacylglycerols, diacylglycerols and diacetylated tartaric acid esters of monoglycerides and is free from low molecular weight emulsifiers added as such,
wherein at least a part of the fat is provided by a nut component comprising nut protein and fat, and
wherein the viscosity of the paste is between 3000 mPa.s and 45000 mPa.s at a shear rate of 75 s-1 at 20 °C.

Polysaccharides having a molecular weight between 10⁴ Da and 2.5 x 10⁶ Da were found to be capable of stabilizing an oil-in-water emulsion in such a paste, even in pastes where the amount of water exceeds the amount of fat. The high molecular weight polysaccharides may have a weight average molecular weight between 1 x 10⁴ Da and 2.5 x 10⁶ Da. Pastes are soft substances, for example the paste of the invention may exhibit a maximum penetration force of less than 100 gram-force at 20 °C, for example a maximum penetration force between 10 and 60 gram-force at 20 °C. The maximum penetration force may for example be measured using a texture analyser fitted with a 60° conical probe. Pastes are thick substances, the paste of the invention has a viscosity between 3000 and 45000 mPa.s at a shear rate of 75 s⁻¹ at 20 °C. For example as measured using an Anton Paar Rheometer.

Polysaccharides are polymeric carbohydrate molecules composed of long chains of monosaccharide units bound together by glycosidic linkages. In the context of the current invention, oligosaccharides contain between three and ten monosaccharide units and polysaccharides contain more than ten monosaccharide units. Polysaccharides having a molecular weight between 10⁴ Da and 2.5 x 10⁶ Da contain large numbers of linked monosaccharide units.

The molecular weight of a polysaccharide may for example be determined by size exclusion chromatography (SEC), for example using a carbohydrate specific orcinol-sulfuric acid carbohydrate detector. For example, separation may be performed using a set of Superose^{™} 6 Increase 10/300 GL and Superdex^{™} 30 Increase 10/300 GL columns connected in series. A 0.1N KOH solution prepared by filtering through 0.45µ filter may be used as the eluent for the chromatography, for example with an eluent flow through the columns kept constant at 0.5ml/min. The eluted carbohydrates may be detected by continuously injecting them into a segmented orcinol-sulfuric acid stream initially heated to 115°C and cooled to 15°C in the SEC setup prior to debubbling and absorption measurement at 420 nm.

Molecular weight standards (for example pullulan molecular weight standards and sugars) may be injected into the SEC system for calibration. The weight average molecular weight may be calculated from the carbohydrate profile of the sample.

In an embodiment, the paste has a dispersed fat phase. The dispersed fat phase may be emulsified in the continuous aqueous phase by the high molecular weight polysaccharides. The high molecular weight polysaccharides may for example be present at the oil-fat interface. The nature of the continuous phase may be determined by any method known in the art, for example it may be determined by microscopy, for example by microscopy of a sample where the fat and/or water phase have been selectively stained.

In the context of the present invention, the term fat refers to triglycerides. Fats are the chief component of animal adipose tissue and many plant seeds. Fats which are generally encountered in their liquid form at ambient temperature are commonly referred to as oils. In the present invention the terms oils and fats are interchangeable. In an embodiment the sweetener is selected from the group consisting of sucrose, dextrose, fructose, lactose, maltose, hydrolysed corn syrup, allulose, tagatose, erythritol, steviol glycosides, mogrosides and combinations of these. For example the sweetener may be selected from the group consisting of sucrose, allulose, tagatose, erythritol, steviol glycosides, mogrosides and combinations of these. The paste may be suitable for people following a ketogenic diet, for example the sweetener may consist of sweeteners that do not contribute significant amounts of glucose to the blood, for example allulose, tagatose, xylitol, maltitol, sorbitol, erythritol, steviol glycosides or mogrosides.

The polysaccharides having a molecular weight below 1 x 10⁴ Da are fructan. Fructans are polymers of fructose molecules. Fructans with a short chain length (less than 10 monomer units) are known as fructooligosaccharides. Fructans do not contribute significant amounts of glucose to the blood and so are suitable for people following a ketogenic diet. The fructan according to the present invention may have a chain length of 10 or above. In an embodiment of the invention the fructan is inulin. The molecular weight of inulin varies according to source and processing but is usually below 5500 Da.

The paste of the invention has good dispersability and emulsion stability without requiring emulsifiers that may be badly perceived by consumers. paste of the invention is free from added MAG, DAG and DATEM. By the term "free from added" is meant that the paste does not contain any MAG, DAG or DATEM which have been added as such. A paste free from added MAG, DAG and DATEM may contain minor amounts of these emulsifiers which are present as minor impurities of one or more of the ingredients of the paste. For example, vegetable oils may naturally contain small amounts of monoacylglycerols and diacylglycerols. Monoacylglycerols are also known as monoglycerides and diacylglycerols are also known as diglycerides.

The paste of the invention is free from low molecular weight emulsifiers added as such. Low molecular weight emulsifiers include, but are not limited to, monoacylglycerols, diacylglycerols, diacetylated tartaric acid esters of monoglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, succinic acid esters of monoglycerides and diglycerides, lactic acid esters of monoglycerides and diglycerides, lysophospholipids, phospholipids, galactolipids, and sucrose esters of fatty acids. Phospholipids and galactolipids may be present as components of other ingredients at levels below 10 wt.% in the ingredient, for example below 5 wt.% in the ingredient, but not added as such or in the form of an ingredient having high (e.g. greater than 40 wt.%) levels of phospholipids or galactolipids, for example lecithin. The paste according to the invention is free from added monoacylglycerols, diacylglycerols, diacetylated tartaric acid esters of monoglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, succinic acid esters of monoglycerides and diglycerides, lactic acid esters of monoglycerides and diglycerides and sucrose esters of fatty acids. In an embodiment, the paste is free from diacetylated tartaric acid esters of monoglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, succinic acid esters of monoglycerides and diglycerides, lactic acid esters of monoglycerides and diglycerides and sucrose esters of fatty acids.

At least part of the paste is provided by a nut component comprising nut protein and fat. In the context of the present invention the term "nut" is used in the culinary sense. The nut according to the invention may be a true nut for example hazelnut or chestnut. The nut may be a drupe such as almond, cashew, coconut, pecan, pistachio, walnut, apricot kernel. The nut may be a nut-like seed, for example brazil nut, macadamia nut, peanut or pine nut. Preferably the nut component comprises the majority (for example at least 80, 90, 95, 98 wt.%), of the dry components of the nut once components that are not normally eaten have been removed, for example husk, skin or shell. The nut component may be for example a nut paste, nut butter, nut slurry or nut cream. The nut component may comprise at least 15 wt.% fat, for example at least 20 wt.% fat. The nut component may be obtained from nuts as raw material by any processing, for example, through physical processing, e.g. removing husk, skin or shell and other parts that are not normally eaten, mincing, grinding milling, pulverization, and/or separation, and/or sometimes by heat treatment (for example roasting). The nut may be selected from the group consisting of hazelnut, chestnut, almond, cashew, coconut, pecan, pistachio, walnut, apricot kernel, brazil nut, macadamia nut, peanut, pine nut and combinations of these. The nut may be almond and/or coconut. The nut component may be selected from the group consisting of coconut cream, almond butter and combinations of these.

Coconut cream is a thick milky fluid obtained by manually or mechanically extracting fresh coconut kernel. It contains at least 20 wt.% fat.

Nut butters are formed by grinding culinary nuts into a paste. The nut butters according to the invention may be selected from the group consisting of almond butter, cashew butter, hazelnut butter, macadamia nut butter, peanut butter, pecan butter, pistachio butter and walnut butter.

The inventors were surprised to find that a nut component comprising the majority of the dry components of the nut was particularly effective at stabilizing a beverage prepared from a high fat paste and preventing an oily layer appearing on the surface. For example, almond butter was more effective at stabilizing a beverage prepared from a high fat paste than almond oil; almond oil with skim milk powder (providing protein); or almond oil with skim milk powder and soy lecithin (providing protein and phospholipids).

In an embodiment the high molecular weight polysaccharides are comprised in at least one gum selected from the group consisting of gum acacia, pectin, guar, gellan, xanthan, carob, carrageenan, cellulose gum and combinations of these. For example the high molecular weight polysaccharides may be comprised in at least one gum selected from the group consisting of gum acacia, pectin, guar and combinations of these. For example, the paste may comprise gum acacia.

In an embodiment the high molecular weight polysaccharides are comprised in a vegetable material selected from the group consisting of coffee, tea and combinations of these. The coffee or tea may be fermented and/or roasted. Tea in the present context refers to leaves and leaf buds of *Camellia sinensis.* The tea may be matcha tea. The high molecular weight polysaccharides may be comprised in aqueous extracts of coffee or tea. The high molecular weight polysaccharides according to the invention may be obtained from coffee, for example the high molecular weight polysaccharides may be obtained from high yield coffee extracts such as extracts with a yield on a roasted coffee weight basis of more than 35%, for example more than 40%, 45%, 50% and 55%. When roasted coffee is extracted at temperatures above 100 °C, for example temperatures between 130 °C and 180 °C, partial hydrolysis of the coffee occurs releasing soluble polysaccharides. In an embodiment, the high molecular weight polysaccharides are polysaccharides of galactose, mannose and arabinose. In a further embodiment, the paste comprises at least 3 wt.% on a dry basis of high molecular weight polysaccharides having a molecular weight between 1 x 10⁴ Da and 2.5 x 10⁶ Da being polysaccharides of galactose, mannose and arabinose from roasted coffee extract. At least 80 wt.% of the high molecular weight polysaccharides according to the paste of the invention may be polysaccharides of galactose, mannose and arabinose. The high molecular weight polysaccharides being polysaccharides of galactose, mannose and arabinose may be quantified by separation of the desired molecular weight by membrane filtration followed by complete hydrolysis and quantification of galactose, mannose and arabinose by HPLC. The inventors were surprised to find that high molecular weight polysaccharides obtained from high yield coffee extracts were particularly effective at stabilizing an oil in water emulsion.

Low yield coffee extracts may also be used in the paste of the invention as may coffee extracts such as cold brew coffee, but other sources of high molecular weight polysaccharides may need to be added to reach a level of between 0.5 to 5 wt.% on a dry basis of high molecular weight polysaccharides having a molecular weight between 1 x 10⁴ Da and 2.5 x 10⁶ Da in the paste. The paste of the invention may not contain coffee, for example the paste may be suitable for adding to a coffee beverage but not contain coffee itself.

It is beneficial for the dispersion of the paste that it comprises soluble bulk sweeteners. In an embodiment the paste comprises 20 to 40 wt.% sweetener wherein the sweetener is selected from the group consisting of allulose, tagatose, erythritol, xylitol and combinations of these. The sweetener may be allulose.

Fructan helps create suitable viscosity for the paste. The fructan is present at a level between 10 and 50 wt.% of the paste. In an embodiment the fructan may be insoluble in water at 20 °C. An insoluble fructan (for example a fructan that forms a gel) maintains a thick texture in the paste.

In an embodiment the paste has a solid fat content at 20 °C of between 0 and 50, for example between 0 and 30, for example between 0 and 20 %, for further example between 0 and 10 %. This level of solid fat content provides a paste which is easy to handle, for example is easy to spoon out of a jar, and disperses well into water. It is surprising that the composition of the invention provides an oil in water emulsion that is stable against oiling-out (oil rising to the surface on storage) despite the low solid fat content. Components with high solid fat content are commonly added to materials such as peanut butter to prevent oiling-out. A solid fat content solid fat content at 20 °C of between 0 and 50 % may for example be achieved by mixing fats which, although having a higher solid fat content individually, form a eutectic mixture when mixed. The solid fat content may be measured by pulsed NMR, for example according to the IUPAC Method 2.150 b (special thermal pretreatment) [IUPAC, Standard Methods for the Analysis of Oils, Fats and Derivatives, 7th Revised and Enlarged Edition (1987)]. The fat may be extracted from the paste before solid fat content measurement, for example it may be extracted using Soxhlet extraction.

In an embodiment, the paste has a water to fat ratio by weight from 0.35 to 2.0, for example from 0.4 to 1.6, for further example from 0.6 to 0.95. It is beneficial that the paste according to the invention can provide a stable oil in water emulsion in a system having an excess of fat compared to water. The paste may have a moisture content between 10 and 25 wt.%. The paste may have a water activity of less than 0.85 at 20 °C.

In an embodiment the paste comprises a fat-containing ingredient selected from the group consisting of dairy butter, cream, clarified butter fat or ghee, lard, tallow, medium chain triglyceride oil, high oleic oils, interesterified oils, hydrogenated fats, omega-3 oil, vegetable oils such as olive oil, palm oil, canola oil, peanut oil, corn oil, coconut oil, soybean oil, cocoa butter, chocolate and combinations of these. For example the paste may contain a fat-containing ingredient selected from the group consisting of dairy butter, medium chain triglyceride oil, high oleic oils, omega-3 oil, chocolate and combinations of these.

The paste may comprise medium chain triglycerides (MCT) oil, for example the paste may comprise between 5 and 20 wt.% medium chain triglycerides (for example between 8 and 20 wt.% medium chain triglycerides). These are triglycerides where two or three of the fatty acid moieties have six to twelve carbon atoms. MCT oils are favoured by persons following a ketogenic diet. The paste may for example comprise MCT oil and allulose.

The paste may comprise dairy butter, for example dairy butter and MCT oil. Coffee with medium chain triglyceride oil and butter is considered by many people to be an energizing drink promoting high performance. It is advantageous that the paste of the invention allows such a beverage to be prepared easily and without significant oil floating on top. Dairy butter is most frequently made from cow's milk but can also be manufactured from the milk of other mammals, such as sheep and goats.

In an embodiment the paste comprises buttermilk, for example sweet buttermilk powder.

In an embodiment (not according to the invention) the paste comprises
25 to 35 wt.% allulose;
20 to 30 wt.% dairy butter;
10 to 14 wt.% MCT oil;
8 to 15 wt.% inulin;
4 to 8 wt.% buttermilk powder;
0.8 to 2 wt.% gum acacia;
made up to 100 wt.% with water.

The paste may be suitable for people following a vegan ketogenic diet. In an embodiment (not according to the invention) the paste comprises
25 to 35 wt.% allulose;
20 to 30 wt.% almond butter;
10 to 14 wt.% MCT oil;
8 to 15 wt.% inulin;
0.8 to 2 wt.% gum acacia;
0.5 to 1 wt.% turmeric:
made up to 100 wt.% with water.

In an embodiment the paste comprises high oleic oils. High oleic oils have a minimum content of 80 % oleic acid, that is to say, oleic fatty acid moieties are 80% by weight of the total fatty acids in the oil. The fatty acids are almost all present as part of triglycerides. The high oleic oils may be selected from the group consisting of high oleic canola oil, high oleic soybean oil, high oleic sunflower oil, high oleic safflower oil and combinations thereof.

In an embodiment the paste comprises omega-3 oils. In the context of the present invention, omega-3 oils are oils having at least 10 % total eicosapentaenoic acid and docosahexaenoic acid, that is to say, eicosapentaenoic acid and docosahexaenoic acid moieties in total are at least 10% by weight of the total fatty acids in the oil. The fatty acids are almost all present as part of triglycerides.

In an embodiment the paste comprises chocolate, for example white chocolate, milk chocolate or dark chocolate. The term chocolate in the current specification does not necessarily mean that the material complies with the food labelling regulations to be called "chocolate" in a particular jurisdiction.

In an embodiment, the paste comprises coconut cream, almond butter and white chocolate.

The paste of the invention may comprise ingredients associated with health benefits by consumers, for example the paste may comprise a component selected from the group consisting of collagen (for example hydrolysed collagen), biotin (also called vitamin B7), zinc, iron, calcium, magnesium, potassium, vitamin A, vitamin C and combinations of these.

In an embodiment the paste comprises an aromatic vegetable material selected from the group consisting of hibiscus flowers, rosehips, rose petals, elderberries, pomegranate, cranberries, lemon verbena, ginger root, lemon balm, thyme, eucalyptus, jasmine flowers, vanilla bean, cinnamon, turmeric, cascara (coffee cherry pulp or husk), cocoa, extracts of these and combinations of these. The aromatic vegetable material may be turmeric.

The aromatic vegetable material may have a fat content below 15 wt.% on a dry basis. The aromatic vegetable material according to the invention may be an aromatic vegetable extract. The vegetable extract according to the invention may be extracted with water. For example the aromatic vegetable material may be roasted and/or fermented before being extracted with water. The vegetable extract may have been subjected to drying.

In an embodiment the paste comprises an acidity regulator selected from the group consisting of sodium bicarbonate, citrate salt or combinations of these. The acidity regulator may be selected from the group consisting of citrus fruit juice, baking soda and combinations of these.

In an embodiment (not according to the invention) the paste comprises
40 to 45 wt.% allulose;
8 to 15 wt.% high yield soluble coffee powder
20 to 25 wt.% dairy butter;
10 to 14 wt.% MCT oil;
made up to 100 wt.% with water.

The paste may comprise ingredients associated with indulgence and beauty. In an embodiment (not according to the invention) the paste comprises
35 to 40 wt.% sucrose;
8 to 15 wt.% high yield soluble coffee powder;
8 to 12 wt.% white chocolate;
25 to 30 wt.% coconut cream;
4 to 8 wt.% almond butter;
4 to 6 wt.% collagen powder;
0.001 to 0.003 wt.% biotin;
made up to 100 wt.% with water.

The paste may comprise matcha tea. In an embodiment (not according to the invention) the paste comprises
4 to 8 wt.% matcha powder;
40 to 50 wt.% sucrose;
30 to 34 wt.% coconut cream;
8 to 12 wt.% almond butter;
2 to 5 wt.% inulin;
0.5 to 2 wt.% gum acacia;
made up to 100 wt.% with water.

An aspect of the invention provides the use of the paste of the invention to prepare a beverage.

A further aspect of the invention provides a process for preparing the paste of the invention. For example the process may comprise mixing the ingredients at a temperature at which the fat has a solid fat content below 1% (for example at a temperature between 65 and 85 °C, for further example at a temperature between 65 and 85 °C for a period of between 3 and 10 minutes). Mixing at a temperature at which the fat is liquid allows a full mixing and the formation of any eutectics. The process may comprise filling the paste into containers.

Further advantages and features of the present invention are apparent from the figures and non-limiting examples.

### Examples

### Example 1: Coconut cream ketogenic beverage enhancer paste

Ingredients:
16 wt.% MCT oil
31.7 wt.% allulose
11 wt.% inulin (weight average molecular weight 4110 Da)
1.3 wt.% gum acacia
40 wt.% coconut cream

The allulose was dry blended with the acacia gum and inulin. Coconut cream was mixed in at 60-65 °C for 10 minutes in a heated scraped surface mixer to form a slurry before MCT oil was added and mixed for a further 10 minutes at 60-65 °C. The mixture was then heated to 78.5 °C and held for 5 minutes. The mixture was cooled to 60 °C while stirring, filled into containers, sealed and allowed to cool.

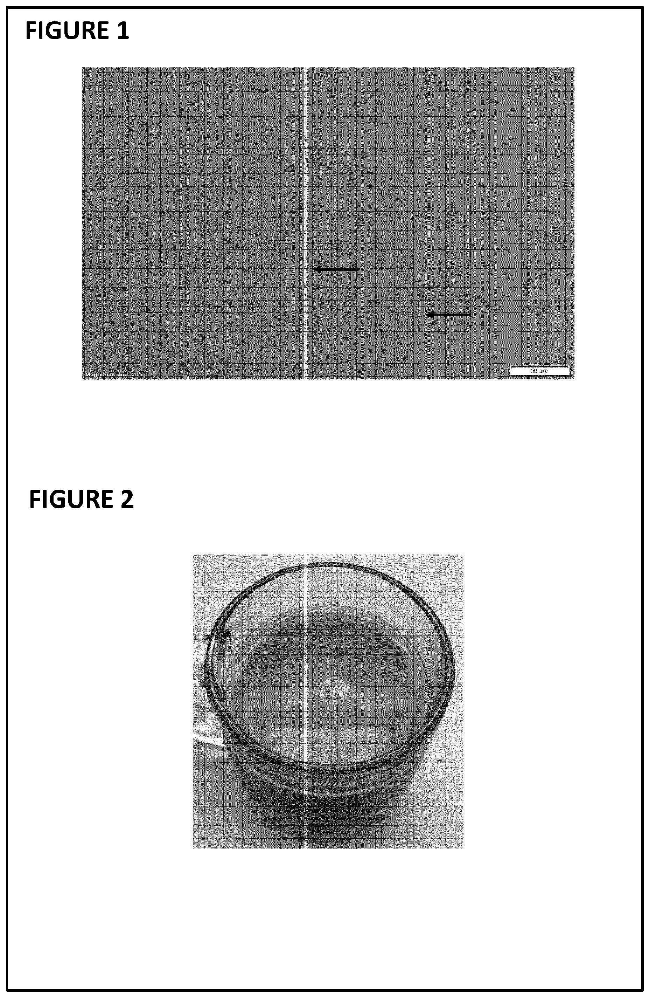

Microscopy was performed by spreading a small amount of the paste on a glass slide with a cover slip to foam a thin film and observing the microstructure of the paste under a light microscope with a polarizer. The microscope image is shown in Figure 1. The paste had well dispersed fat globules as a discontinuous phase. The globules were stable. Insoluble material from the coconut cream is visible which may further help to stabilize the fat globules.

A tablespoonful of the paste was mixed into a cup of coffee at 80 °C. A beverage was produced after stirring for a few seconds. The beverage had only minor droplets of oil on the surface (Figure 2).

### Example 2: Comparison between almond butter and components

Pastes were prepared with compositions as listed in the table below.

| Ingredients (% wt. of total) | Paste 2a | Paste 2b | Paste 2c | Paste 2d |
|---|---|---|---|---|
| | | | | |
| Almond butter (53% fat) | 25 | | | |
| MCT oil | 12 | 12 | 12 | 12 |
| Gum acacia | 1.3 | 1.3 | 1.3 | 1.3 |
| Allulose (crystalline) | 31 | 31 | 28.5 | 28.4 |
| Inulin (MW 4110 Da) | 11 | 23 | 11 | 11 |
| Skim Milk Powder | | | 14.5 | 14.5 |
| Almond oil | | 13 | 13 | 13 |
| Lecithin | | | | 0.1 |
| Water | 19.7 | 19.7 | 19.7 | 19.7 |

Paste 2a was prepared with almond butter. For paste 2b the almond butter was replaced by an equivalent amount of almond oil together with inulin. For paste 2c the almond butter was replaced by an equivalent amount of almond oil together with skim milk powder acting to replace the protein component of almond butter. For paste 2d the almond butter was replaced by an equivalent amount of almond oil together with skim milk powder acting to replace the protein component of almond butter and lecithin to partially replace the phospholipids in almond butter (some phospholipids will be provided by the skim milk powder).

The allulose was dry blended with the acacia gum and inulin (and skim milk powder when present). Hot water was slowly added to the dry blend with constant agitation in a heated scraped surface mixer to form a slurry. The mixture was allowed to hydrate at 60-65 °C for 10 minutes. MCT oil, almond butter/almond oil and lecithin (when present) were added and mixed for a further 10 minutes at 60-65 °C. The full mixture was then heated to 78.5 °C and held for 5 minutes. The mixture was cooled to 60 °C while stirring, filled into containers, sealed and allowed to cool.

The viscosity of each paste was measured at a shear rate of 75 s⁻¹ at 20 °C using an Anton Paar Rheometer.

| | 2a | 2b | 2c | 2d |
|---|---|---|---|---|
| Viscosity / mPa.s | 38901 | 8522 | 19585 | 22072 |

The pastes were examined by microscopy and added to a coffee beverage as in Example 1.

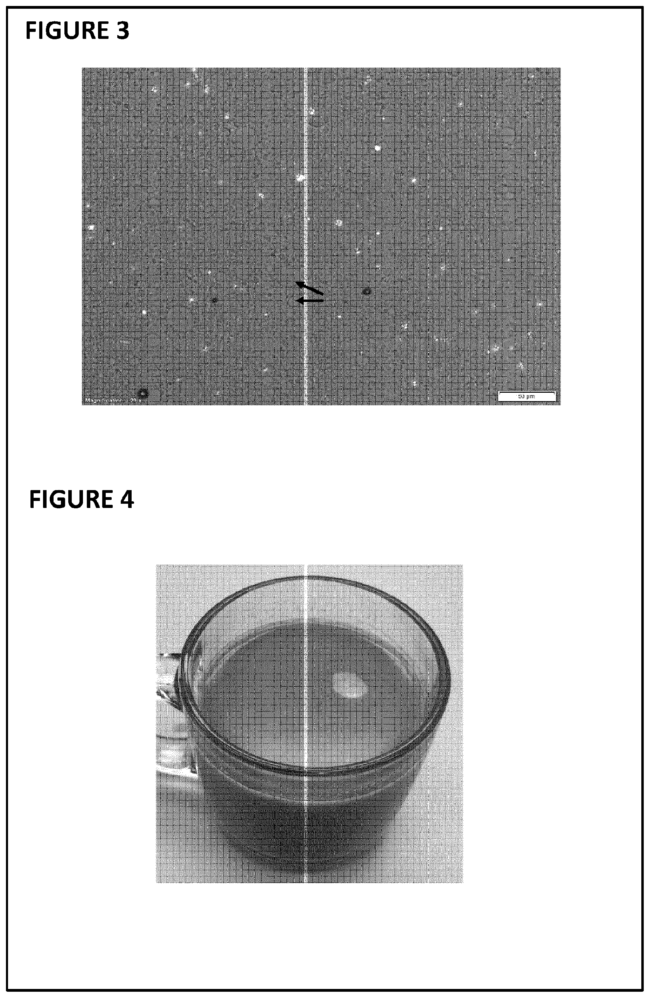

A microscope image of the almond butter paste (2a) is shown in Figure 3. The fat globules were found to be small and present as a discontinuous phase in the paste.

The globules were stable. On addition to a coffee beverage, paste 2a gave almost no surface oil (Figure 4).

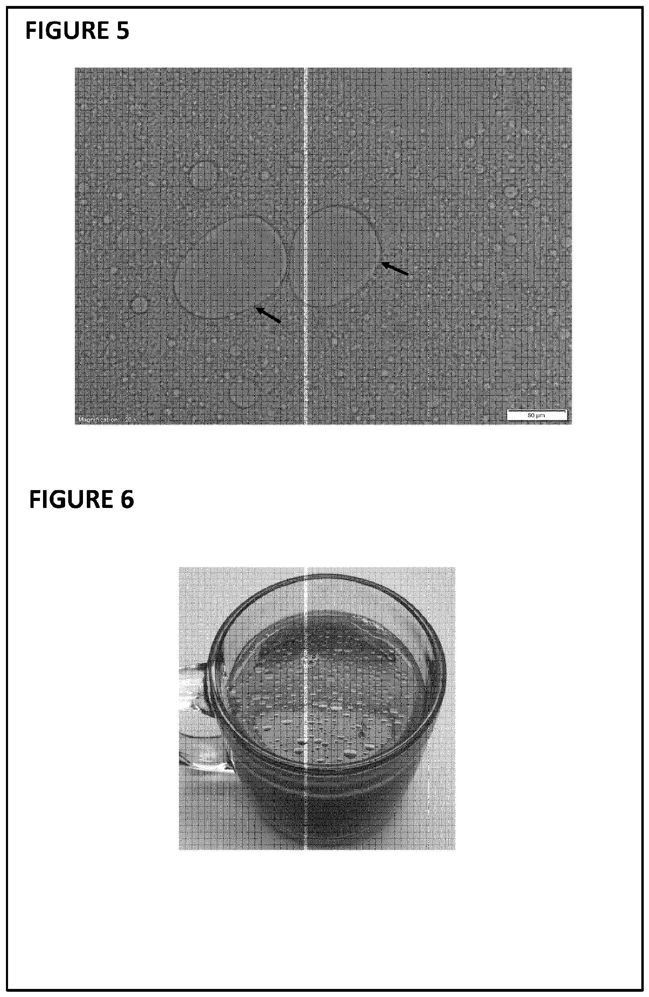

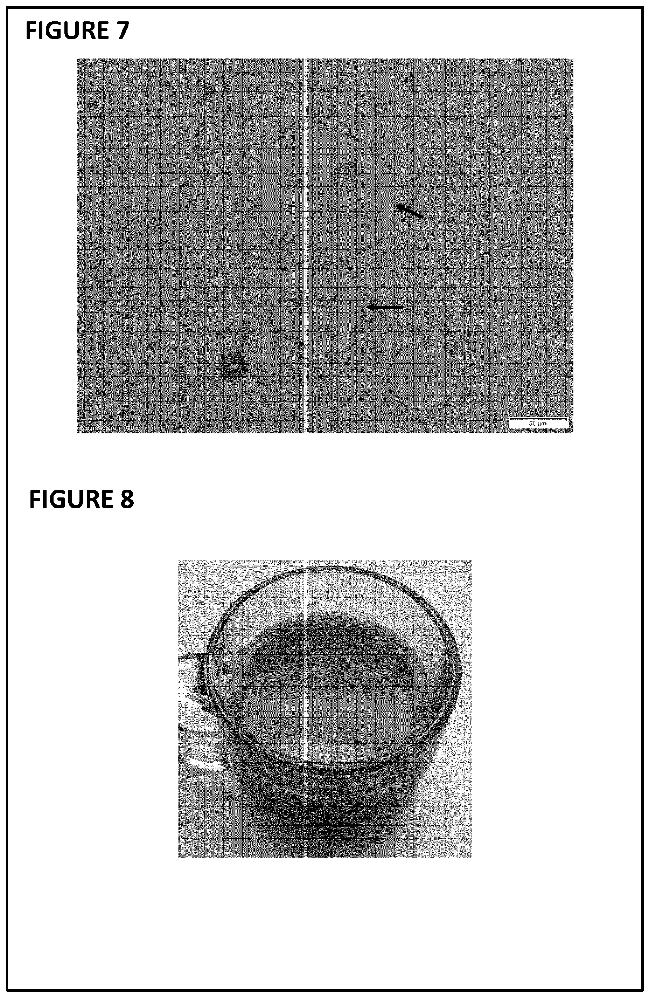

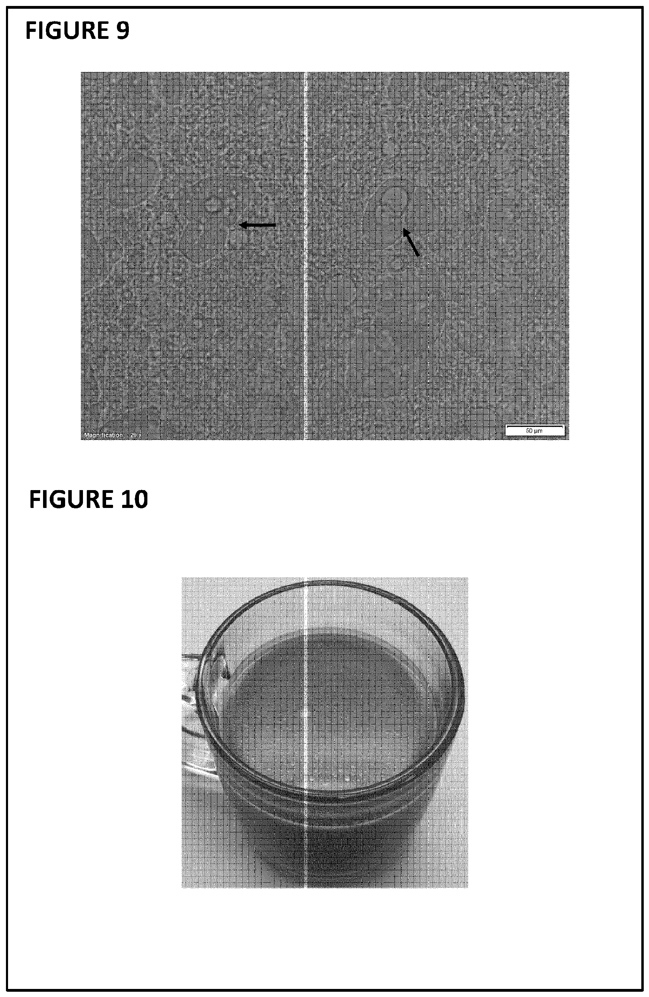

Unlike pastes Ex1 and 2a, the pastes 2b, 2c and 2d all showed rapid oiling out on storage, although the oil could be re-incorporated by re-mixing the paste. Under the microscope (2b = Figure 5, 2c = Figure 7 and 2d = Figure 9) the fat droplets were not stable and coalescence of the oil droplets was observed leading to the formation of large oil droplets. In the cup, paste 2b (Figure 6) gave the greatest amount of surface oil, with pastes 2c (Figure 8) and 2d (Figure 10) having less surface oil. The coffee beverage with the almond butter paste (2a) had much less surface oil than the beverages made with pastes where almond butter had been replaced by almond oil (2b), almond oil with protein (2c) or almond oil with protein and lecithin (2d). The coffee beverage with almond butter paste had the lightest colour.

## Claims

1. A paste for preparing a beverage, the paste having a continuous aqueous phase, the paste comprising:
0.1 to 50 wt.% sweetener;
10 to 50 wt.% fat;
10 to 50 wt.% fructan polysaccharides having a molecular weight below 1 x 10⁴ Da; and 0.5 to 5 wt.% high molecular weight polysaccharides having a molecular weight between 1 x 10⁴ Da and 2.5 x 10⁶ Da;
wherein the paste is free from added monoacylglycerols, diacylglycerols and diacetylated tartaric acid esters of monoglycerides and is free from low molecular weight emulsifiers added as such,
wherein at least a part of the fat is provided by a nut component comprising nut protein and fat, and
wherein the viscosity of the paste is between 3000 mPa.s and 45000 mPa.s at a shear rate of 75 s⁻¹ at 20 °C.

2. The paste according to claim 1 wherein the high molecular weight polysaccharides are comprised in at least one gum selected from the group consisting of gum acacia, pectin, guar, gellan, xanthan, carob, carrageenan, cellulose gum and combinations of these.

3. The paste according to claim 1 wherein the high molecular weight polysaccharides are comprised in a vegetable material selected from the group consisting of coffee, tea and combinations of these.

4. The paste according to any one of claims 1 to 3 comprising 20 to 40 wt.% sweetener wherein the sweetener is selected from the group consisting of allulose, tagatose, erythritol, xylitol and combinations of these.

5. The paste according to any one of claims 1 to 4 wherein the fructan is insoluble in water at 20 °C.

6. The paste according to any one of claim 1 to 5 having a solid fat content at 20 °C of between 0 and 50 %.

7. The paste according to any one of claims 1 to 6 wherein the water to fat ratio by weight is from 0.35 to 2.0.

8. The paste according to any one of claims 1 to 7 comprising between 5 and 20 wt.% medium chain triglycerides.

9. The paste according to any one of claims 1 to 8 comprising a fat-containing ingredient selected from the group consisting of dairy butter, medium chain triglyceride oil, high oleic oil, omega-3 oil, chocolate and combinations of these.

10. The paste according to any one of claims 1 to 9 comprising an aromatic vegetable material selected from the group consisting of hibiscus flowers, rosehips, rose petals, elderberries, pomegranate, cranberries, lemon verbena, ginger root, lemon balm, thyme, eucalyptus, jasmine flowers, vanilla bean, cinnamon, turmeric, cascara, cocoa, extracts of these and combinations of these.

11. Use of a paste according to any one of claims 1 to 10 to prepare a beverage.

12. A process for preparing a paste according to any one of claims 1 to 10.

## Patentansprüche

1. Paste zum Herstellen eines Getränks, wobei die Paste eine kontinuierliche wässrige Phase aufweist, die Paste umfassend:
zu 0,1 bis 50 Gew.-% Süßstoff;
zu 10 bis 50 Gew.-% Fett;
zu 10 bis 50 Gew.-% Fructanpolysaccharide, die ein Molekulargewicht unter 1 x 10⁴ Da aufweisen; und
zu 0,5 bis 5 Gew.-% Polysaccharide mit hohem Molekulargewicht, die ein Molekulargewicht zwischen 1 x 10⁴ Da und 2,5 x 10⁶ Da aufweisen;
wobei die Paste frei von zugesetzten Monoacylglycerolen, Diacylglycerolen und diacetylierten Weinsäureestern von Monoglyceriden ist und frei von Emulgatoren mit niedrigem Molekulargewicht ist, die als solche zugesetzt werden,
wobei mindestens ein Teil des Fetts durch eine Nusskomponente bereitgestellt wird, umfassend Nussprotein und Fett, und
wobei die Viskosität der Paste zwischen 3000 mPa.s und 45000 mPa.s bei einer Scherrate von 75 s⁻¹ bei 20 °C liegt.

2. Paste nach Anspruch 1, wobei die Polysaccharide mit hohem Molekulargewicht in mindestens einem Gummi umfasst sind, das aus der Gruppe ausgewählt ist, bestehend aus Gummiarabikum, Pektin, Guar, Gellan, Xanthan, Johannisbrot, Carrageen, Cellulosegummi und Kombinationen davon.

3. Paste nach Anspruch 1, wobei die Polysaccharide mit hohem Molekulargewicht in einem pflanzlichen Material umfasst sind, das aus der Gruppe ausgewählt ist, bestehend aus Kaffee, Tee und Kombinationen davon.

4. Paste nach einem der Ansprüche 1 bis 3, umfassend zu 20 bis 40 Gew.-% Süßstoff, wobei der Süßstoff aus der Gruppe ausgewählt ist, bestehend aus Allulose, Tagatose, Erythrit, Xylit und Kombinationen davon.

5. Paste nach einem der Ansprüche 1 bis 4, wobei das Fructan in Wasser bei 20 °C unlöslich ist.

6. Paste nach einem der Ansprüche 1 bis 5, die einen Festfettgehalt bei 20 °C von zwischen 0 und 50 % aufweist.

7. Paste nach einem der Ansprüche 1 bis 6, wobei das Gewichtsverhältnis von Wasser zu Fett von 0,35 bis 2,0 beträgt.

8. Paste nach einem der Ansprüche 1 bis 7, umfassend zu zwischen 5 und 20 Gew.-% mittelkettige Triglyceride.

9. Paste nach einem der Ansprüche 1 bis 8, umfassend einen fetthaltigen Inhaltsstoff, der aus der Gruppe ausgewählt ist, bestehend aus Milchbutter, mittelkettigem Triglyceridöl, ölsäurereichem Öl, Omega-3-Öl, Schokolade und Kombinationen davon.

10. Paste nach einem der Ansprüche 1 bis 9, umfassend ein aromatisches pflanzliches Material, das aus der Gruppe ausgewählt ist, bestehend aus Hibiskusblüten, Hagebutten, Rosenblättern, Holunderbeeren, Granatapfel, Preiselbeeren, Zitronenverbene, Ingwerwurzel, Zitronenmelisse, Thymian, Eukalyptus, Jasminblüten, Vanilleschote, Zimt, Kurkuma, amerikanischer Faulbaumrinde, Kakao, Extrakten davon und Kombinationen davon.

11. Verwendung einer Paste nach einem der Ansprüche 1 bis 10, um ein Getränk herzustellen.

12. Verfahren zum Herstellen einer Paste nach einem der Ansprüche 1 bis 10.

## Revendications

1. Pâte pour la préparation d'une boisson, la pâte ayant une phase aqueuse continue, la pâte comprenant :
0,1 à 50 % en poids d'édulcorant ;
10 à 50 % en poids de matière grasse ;
10 à 50 % en poids de polysaccharides de fructane ayant une masse moléculaire inférieure à 1 x 10⁴ Da ; et
0,5 à 5 % en poids de polysaccharides de haute masse moléculaire ayant une masse moléculaire comprise entre 1 x 10⁴ Da et 2,5 x 10⁶ Da ;
dans laquelle la pâte est dépourvue de monoacylglycérols, de diacylglycérols et d'esters d'acide tartrique diacétylé de monoglycérides ajoutés et est dépourvue d'émulsifiants de faible masse moléculaire ajoutés en tant que tels,
dans laquelle au moins une partie de la matière grasse est fournie par un composant à base de noix comprenant des protéines et de la matière grasse de fruit à coque, et
dans laquelle la viscosité de la pâte est comprise entre 3 000 mPa.s et 45 000 mPa.s à un taux de cisaillement de 75 s⁻¹ à 20 °C.

2. Pâte selon la revendication 1, dans laquelle les polysaccharides de haute masse moléculaire sont compris dans au moins une gomme choisie dans le groupe constitué de gomme d'acacia, pectine, guar, gellane, xanthane, caroube, carraghénane, gomme de cellulose et des combinaisons de ceux-ci.

3. Pâte selon la revendication 1, dans laquelle les polysaccharides de haute masse moléculaire sont compris dans une matière végétale choisie dans le groupe constitué de café, thé et combinaisons de ceux-ci.

4. Pâte selon l'une quelconque des revendications 1 à 3, comprenant 20 à 40 % en poids d'édulcorant, dans laquelle l'édulcorant est choisi dans le groupe constitué d'allulose, tagatose, érythritol, xylitol et combinaisons de ceux-ci.

5. Pâte selon l'une quelconque des revendications 1 à 4, dans laquelle le fructane est insoluble dans l'eau à 20 °C.

6. Pâte selon l'une quelconque des revendication 1 à 5, ayant une teneur en matière grasse solide à 20 °C comprise entre 0 et 50 %.

7. Pâte selon l'une quelconque des revendications 1 à 6, dans laquelle le rapport en poids entre l'eau et la matière grasse va de 0,35 à 2,0.

8. Pâte selon l'une quelconque des revendications 1 à 7, comprenant entre 5 et 20 % en poids de triglycérides à chaîne moyenne.

9. Pâte selon l'une quelconque des revendications 1 à 8, comprenant un ingrédient contenant de la matière grasse choisi dans le groupe constitué de beurre laitier, huile de triglycérides à chaîne moyenne, huile à haute teneur en acide oléique, huile d'oméga-3, chocolat et combinaisons de ceux-ci.

10. Pâte selon l'une quelconque des revendications 1 à 9 comprenant une matière végétale aromatique choisie dans le groupe constitué de fleurs d'hibiscus, cynorrhodons, pétales de rose, baies de sureau, grenade, canneberges, verveine citronnelle, racine de gingembre, mélisse, thym, eucalyptus, fleurs de jasmin, gousse de vanille, cannelle, curcuma, cascara, cacao, extraits de ceux-ci et combinaisons de ceux-ci.

11. Utilisation d'une pâte selon l'une quelconque des revendications 1 à 10 pour préparer une boisson.

12. Processus de fabrication d'une pâte selon l'une quelconque des revendications 1 à 10.
